(19) Europäisches Patentamt / European Patent Office / Office européen des brevets

(11) **EP 4 715 705 A1**

(12) **EUROPEAN PATENT APPLICATION**
published in accordance with Art. 153(4) EPC

(43) Date of publication:
**25.03.2026 Bulletin 2026/13**

(21) Application number: **24799912.1**

(22) Date of filing: **26.06.2024**

(51) International Patent Classification (IPC):
**G06Q 10/10** (2023.01)

(52) Cooperative Patent Classification (CPC):
**G06N 5/04; G06Q 10/04; G06Q 10/063;
G06Q 10/10; G06Q 30/0201; G06Q 50/06;
H02J 3/38; H02J 13/00; H02S 50/00**

(86) International application number:
**PCT/CN2024/101768**

(87) International publication number:
**WO 2024/227456 (07.11.2024 Gazette 2024/45)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 30.04.2023  CN 202310482410
30.04.2024  CN 202410545227

(71) Applicant: **Shanghai Sigeyuan Intelligent
Technology Co., Ltd.
Shanghai 200000 (CN)**

(72) Inventors:
• **ZUO, Zhelei
Shanghai 200000 (CN)**
• **JIANG, Chao
Shanghai 200000 (CN)**
• **YANG, Weizhong
Shanghai 200000 (CN)**

(74) Representative: **Bayramoglu et al.
Mira Office
Kanuni Sultan Süleyman Boulevard 5387
Street Beytepe, floor 12, no:50
06800 Cankaya, Ankara (TR)**

(54) **TOU REVENUE CALCULATION UNIT, AND INTELLIGENT MANAGEMENT SYSTEM FOR PHOTOVOLTAIC TOU MODE**

(57) The present disclosure provides a Time-of-Use (TOU) revenue calculation unit and an intelligent management system for a photovoltaic (PV) TOU mode, which are applied in the PV field. A PV power station is subject to TOU control according to configured TOU configuration information data. The TOU revenue calculation unit includes a PV energy storage system model and a revenue management module. The PV energy storage system model is formed based on a structural digital twin of the PV power station. The PV energy storage system model simulates operation of the PV power station under a TOU operation mode, and the revenue management module calculates TOU revenue of the PV power station under the TOU operation mode. The intelligent management system for a PV TOU mode, equipped with the TOU revenue calculation unit, performs corresponding TOU revenue calculation synchronously with the adjustment of TOU configuration information data, which can better meets user demands for autonomous TOU configuration. The process of TOU setting adjustment is simple and efficient, which can lower the technical threshold for operators in PV energy management, thereby improving user experience and realizing better management of PV power stations.

[FIG. 1]

**Description**

TECHNICAL FIELD

The present disclosure relates to the technical field of photovoltaic (PV) control, in particular to the technical field of PV power station management, and specifically to a Time-of-Use (TOU) revenue calculation unit, and an intelligent management system for a PV TOU mode.

BACKGROUND TECHNOLOGY

A PV power station refers to a power generation system that harnesses solar energy, and includes electronic components made of special materials, such as crystalline silicon panels and inverters, and is connected to and supplies power to the power grid. There are two most common electricity consumption management modes for PV power stations: a maximum self-consumption mode and a TOU mode. PV TOU technology combines electricity prices with energy supply and demand conditions to guide users to reduce electricity consumption during peak periods, thereby optimizing energy supply and demand and managing grid operation. The realization of this technology relies on modern smart grid technologies, including smart metering, remote communication, cloud computing, mobile internet, big data analysis, and the like. These modern technologies can make the grid system more intelligent and transparent, and support rapid monitoring and feedback of energy supply and demand changes, enabling localized response measures.

However, neither users nor even some technical personnel can fully understand the setting of the TOU mode, leading to inaccurate settings of the charging and discharging time periods for the TOU mode. Furthermore, the charging and discharging setting parameters in the TOU mode (such as grid feed-in power limits) vary among different countries and power companies, which further increases the difficulty of setting the TOU mode, puts forward higher technical requirements for operators, and results in poor user experience.

In addition, the electricity prices charged by various power companies or the prices for purchasing electricity from PV power stations may vary across different time periods. It is necessary to divide the 24-hour interval of a day into 24 time periods and then configure each time period separately. The configuration process is complex and time-consuming, making TOU configuration even more difficult for users and prone to errors. Due to the instability of electricity prices and the cumbersome TOU configuration process, users are unable to accurately estimate the revenue of PV power stations under different TOU configuration states.

Therefore, developing a method that enables users to conveniently configure the PV TOU mode is an urgent technical problem that needs to be addressed.

CONTENT OF THE INVENTION

A primary objective of the present disclosure is to overcome at least one of the aforementioned defects by providing a TOU revenue calculation unit, which is capable of simulating an operating status of a PV power station and accurately calculating TOU revenue of the PV power station, thereby better serving users and achieving higher economic efficiency while meeting users' electricity demands.

Another primary objective of the present disclosure is to overcome at least one of the aforementioned defects by providing an intelligent management system for a PV TOU mode, which simplifies and facilitates the TOU configuration of a PV power station and dynamically estimates revenue of the PV power station under a TOU mode, thereby better serving users, supporting autonomous and guided TOU mode setting, and achieving higher economic efficiency while meeting users' electricity demands.

In order to achieve the above objectives, the present disclosure adopts the following technical solution:

The present disclosure provides a TOU revenue calculation unit. A PV power station operates in a TOU mode and is subjected to TOU control based on configured TOU configuration information data. The TOU revenue calculation unit includes a PV energy storage system model and a revenue management module, where the PV energy storage system model is formed based on a structural digital twin of the PV power station, and the PV energy storage system model simulates operation of the PV power station under a TOU operation mode, and the revenue management module calculates TOU revenue of the PV power station under the TOU operation mode.

According to an implementation of the present disclosure, the TOU revenue calculation unit includes an auxiliary information acquisition module; the auxiliary information acquisition module is configured to retrieve and call auxiliary operation information of the PV power station; the TOU revenue calculation unit estimates future operating data of the PV power station based on the auxiliary operation information of the PV power station and calculates the TOU revenue of the PV power station by combining the future operating data of the PV power station and the TOU configuration information data.

According to an implementation of the present disclosure, the auxiliary operation information of the PV power station includes weather information, electricity consumption habits of a user, and electricity load conditions of the user.

According to an implementation of the present disclosure, the TOU revenue calculation unit includes a PV power generation prediction algorithm and a user load power prediction algorithm; the PV power generation prediction algorithm is used to estimate future power generation of the PV power station, the user load power prediction algorithm is used to estimate future electricity consumption of a user, and the revenue management module calculates the TOU revenue of the PV power station under the TOU operation mode.

According to an implementation of the present disclosure, the PV energy storage system model simulates and displays the operation of the PV power station under the TOU operation mode based on estimation results.

According to an implementation of the present disclosure, the revenue management module calculates the TOU revenue of the PV power station based on dynamic electricity prices.

According to an implementation of the present disclosure, the dynamic electricity prices are provided by a power operator and are specified electricity prices corresponding to different time periods on a given date.

According to an implementation of the present disclosure, the TOU revenue calculation unit includes a TOU intelligent optimization module; the revenue management module calculates corresponding TOU revenues of the PV power station under different TOU operation modes, and transmits calculation results to the TOU intelligent optimization module for statistical compilation; the TOU intelligent optimization module determines and selects TOU configuration information data corresponding to a specified TOU revenue based on the compiled calculation results, to implement TOU control on the PV power station.

According to an implementation of the present disclosure, the TOU intelligent optimization module compiles statistics on the calculation results and displays the statistical results to the user, and the user selects the TOU configuration information data corresponding to the specified TOU revenue based on the statistical results and conducts TOU control on the PV power station according to the corresponding TOU configuration information data.

According to an implementation of the present disclosure, the TOU intelligent optimization module compiles statistics on the calculation results, and the TOU intelligent optimization module retrieves the TOU configuration information data corresponding to the specified TOU revenue based on statistical results and conducts TOU control on the PV power station according to the corresponding TOU configuration information data.

Particularly, the present disclosure further provides an intelligent management system for a PV TOU mode, including:

an analysis and management unit configured to receive a parameter configuration instruction input by a user and perform analysis and processing to generate valid feature data;
a TOU configuration management unit preset with a TOU data template and a plurality of configuration modes, where the TOU configuration management unit receives the valid feature data, selects the TOU data template or a configuration mode based on the valid feature data, and fills in and completes the TOU data template based on the valid feature data to form TOU configuration information data; and
the TOU revenue calculation unit described above, connected to the TOU configuration management unit and configured to simulate operation of a PV power station under a TOU operation mode and calculate TOU revenue of the PV power station under TOU control based on the TOU configuration information data.

According to an implementation of the present disclosure, the intelligent management system for a PV TOU mode includes an interaction side; the interaction side is configured to receive the parameter configuration instruction input by the user and perform adjustment according to the parameter configuration instruction to form the TOU configuration information data; the TOU revenue calculation unit receives the TOU configuration information data and simultaneously simulates the operation of the PV power station under the TOU operation mode, and simultaneously calculates the TOU revenue of the PV power station under TOU control based on the TOU configuration information data.

According to an implementation of the present disclosure, the analysis and management unit includes:

an input preprocessing module configured to receive the parameter configuration instruction input by the user, and perform feature extraction on the parameter configuration instruction to form an output instruction; and
a large language model with an input side connected to the input preprocessing module and an output side connected to the TOU configuration management unit, where the large language model receives the output instruction and performs processing to form the valid feature data.

According to an implementation of the present disclosure, during the analysis and processing of the parameter configuration instruction by the analysis and management unit, the input preprocessing module performs feature extraction on keywords in the user input instruction and forms a natural language-based output instruction; the large language model then performs format parsing on the output instruction to form the valid feature data, and modifies the TOU configuration information data based on the valid feature data.

According to an implementation of the present disclosure, the analysis and management unit includes an instruction generation template; the instruction generation template is connected to the large language model and is configured to select and define a role played by the large language model.

Compared with the prior art, the TOU revenue calculation unit and the intelligent management system for a PV TOU mode provided by the present disclosure have the following advantages and beneficial effects:
The TOU revenue calculation unit of the present disclosure can simulate the operation of a PV power station, and can display the specific operating conditions of the PV power station under the TOU mode. Meanwhile, the corresponding TOU revenue generated by the PV power station under the TOU operation mode is calculated in combination with electricity price conditions. The calculation process can be completed automatically without user intervention, which facilitates users in adjusting the TOU configuration information data, achieving optimal economic efficiency while meeting users' electricity demands.

Furthermore, the TOU revenue calculation unit of the present disclosure supports TOU revenue calculation under dynamic electricity prices, which can better calculate the expected TOU revenue, facilitate users in adjusting the TOU configuration information data, and enhance user engagement with TOU control of the PV power station.

Additionally, the intelligent management system for a PV TOU mode of the present disclosure reduces and simplifies the input requirements on a user terminal. Users only need to input parameter configuration instructions for TOU via voice, text, or even images. The analysis and management unit analyzes and processes the parameter configuration instructions to obtain valid feature data therefrom. Then, the TOU configuration management unit completes the TOU configuration information data according to the acquired valid feature data. The corresponding TOU revenue calculation can be performed synchronously with the adjustment of the TOU configuration information data, which can better meet user demands for autonomous TOU configuration. The process of TOU setting adjustment is simple and efficient, which can lower the technical threshold for operators in PV energy management, thereby improving user experience and realizing better management of PV power stations.

Furthermore, the intelligent management system for a PV TOU mode provided by the present disclosure innovatively introduces large language models (such as ChatGPT). The input side of the large language model adopts text-based comprehensive input instructions, and the output side provides output instructions based on natural language. Both the front-end input and the back-end processing output are based on natural language processing, which better meets the usage needs of traditional users. During the final specific execution, the natural language-based output instruction is converted into a standardized format for execution, thereby reducing the processing difficulty of the intelligent management system and better meeting user needs.

DESCRIPTION OF THE DRAWINGS

Some specific embodiments of the present disclosure will be described in detail below in an illustrative rather than restrictive manner with reference to the drawings. The same reference numerals in the drawings refer to the same or similar components or parts. Those skilled in the art should understand that the drawings are not plotted to scale. In the accompanying drawings:

FIG. 1 is a structural schematic diagram of a TOU revenue calculation unit according to an embodiment of the present disclosure;
FIG. 2 is an effect diagram showing simulation of the operation of a PV power station by a PV energy storage system model according to an embodiment of the present disclosure;
FIG. 3 is a chart of prediction results obtained by predicting power generation of a PV power station and user load electricity consumption through a PV power generation prediction algorithm and a user load power prediction algorithm according to an embodiment of the present disclosure;
FIG. 4 is a diagram of accuracy comparison between predicted data, which is obtained by predicting the power generation of the PV power station and the user load electricity consumption through the PV power generation prediction algorithm and the user load power prediction algorithm, and actual measured data according to an embodiment of the present disclosure;
FIG. 5 is a schematic diagram of dynamic electricity prices according to an embodiment of the present disclosure;
FIG. 6 is a schematic diagram of monthly TOU revenue according to an embodiment of the present disclosure; and
FIG. 7 is a structural schematic diagram of an intelligent management system for a PV TOU mode according to an embodiment of the present disclosure.

SPECIFIC IMPLEMENTATIONS

The following clearly and completely describes the technical solutions of the present disclosure with reference to accompanying drawings. Apparently, the described embodiments are merely some rather than all of the embodiments of the present disclosure. All other embodiments obtained by a person of ordinary skill in the art based on the embodiments of the present disclosure without creative efforts shall fall within the protection scope of the present disclosure.

In addition, the technical features involved in the various implementations of the present disclosure described below may be combined with each other as long as they do not constitute a conflict with each other.

Embodiment 1

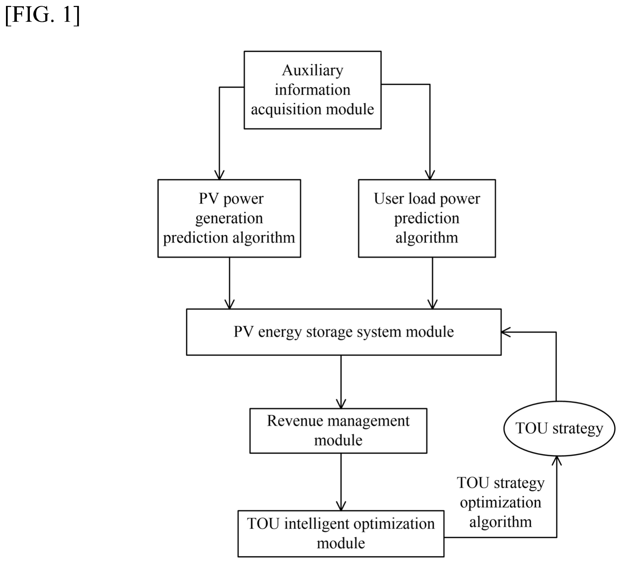

This embodiment provides a TOU revenue calculation unit. A PV power station operates in a TOU mode and is subjected to TOU control based on configured TOU configuration information data. As shown in FIG. 1, the TOU revenue calculation unit includes a PV energy storage system model and a revenue management module, where the PV energy storage system model is formed based on a structural digital twin of the PV power station, and the PV energy storage system model simulates operation of the PV power station under a TOU operation mode, and the revenue management module calculates TOU revenue of the PV power station under the TOU operation mode.

The PV energy storage system model may generally include abstractions of PV components such as PV panels, PV inverters, energy storage battery packs, and electricity loads. Real-time operating data or predicted future operating data of the PV power station is imported into the PV energy storage system model, enabling the PV energy storage system model to accurately simulate the real-time operation or future operation of a PV energy storage system. Especially for scenarios where the operating data of the PV power station is predicted, simulated data can be output as predictions of PV power generation and user load electricity consumption. Furthermore, the output of the PV energy storage system model serves as basic data for the revenue management module, allowing accurate calculation of TOU revenue. The aforementioned real-time operating data or predicted future operating data of the PV power station generally refers to user load electricity consumption, PV power generation output, grid-exported power, and grid-imported power.

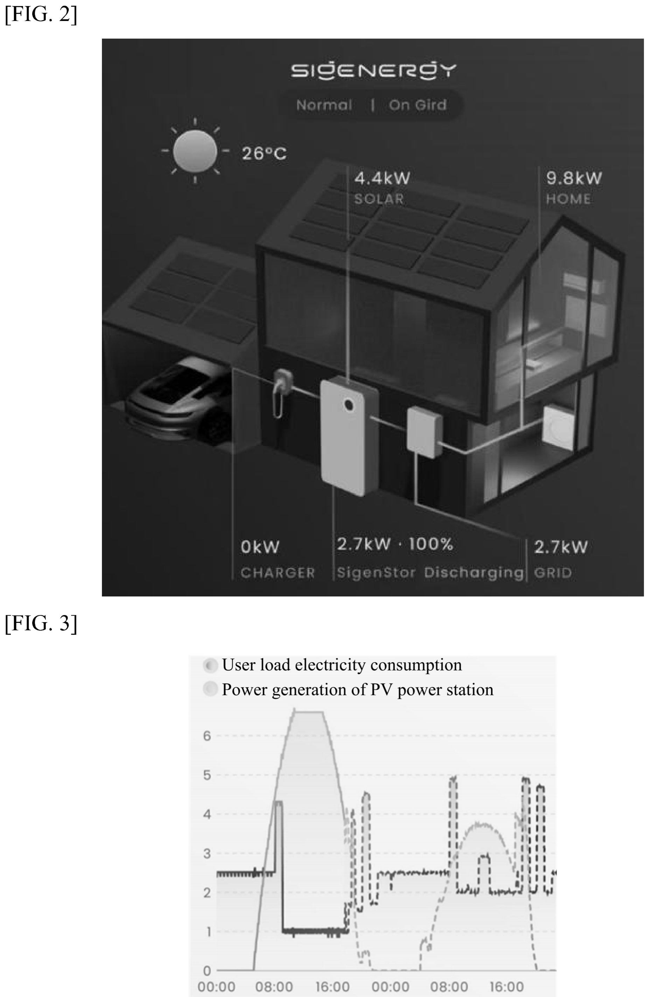

In other words, during operation, the TOU revenue calculation unit can simulate the operation of the PV power station through the PV energy storage system model (as shown in FIG. 2), and can display the specific operating conditions of the PV power station under the TOU mode. Meanwhile, the corresponding TOU revenue generated by the PV power station under the TOU operation mode is calculated in combination with electricity price conditions. The calculation process can be completed automatically without user intervention, which facilitates users in adjusting the TOU configuration information data, achieving optimal economic efficiency while meeting users' electricity demands.

The TOU revenue calculation unit includes an auxiliary information acquisition module; the auxiliary information acquisition module is configured to retrieve and call auxiliary operation information of the PV power station; the TOU revenue calculation unit estimates future operating data of the PV power station based on the auxiliary operation information of the PV power station and calculates the TOU revenue of the PV power station by combining the future operating data of the PV power station and the TOU configuration information data. The auxiliary operation information of the PV power station includes weather information, electricity consumption habits of a user, and electricity load conditions of the user.

The weather information includes, but is not limited to, weather conditions over a period of time, such as weather on weekends, which can be used by the system to plan TOU configuration for a given period.

The electricity consumption habits of the user include, but are not limited to, electricity consumption habits of the user during specific time periods, such as "the user usually sleeps after 23:00," or "the user usually has high electricity demand between 18:00 and 22:00." These instructions will take precedence over other descriptive instructions, ensuring the habits of the user are not disrupted by unexpected situations and guaranteeing electricity quality and safety of the user during specific periods.

The electricity load conditions of the user include, but are not limited to, the user's requirements for electricity loads that need to be guaranteed, such as "the user wants to turn on a high-power air conditioner after 19:00 in November during winter," or "the user wants to ensure a certain amount of charge in the energy storage battery after 18:00 for electric vehicle charging."

Based on equipment data of the PV power station of the user and the weather data, that is, by combining the operating data of the PV power station and the auxiliary operation information of the PV power station acquired by the auxiliary information acquisition module, the TOU revenue calculation unit generates future operating data through a PV power generation prediction algorithm and a user load power prediction algorithm. The PV power generation prediction algorithm is used to estimate future power generation of the PV power station, and the user load power prediction algorithm is used to estimate future electricity consumption of the user. Combined with a configured TOU strategy, the PV energy storage system model is run to estimate and output operating data of the PV system over a given future period, achieving the purpose of estimating electricity conditions. Accordingly, based on the corresponding grid purchase and sale electricity prices, the revenue management module calculates the TOU revenue of the PV power station under the TOU operation mode. The PV energy storage system model simulates and displays the operation of the PV power station under the TOU operation mode based on the estimation results.

The following PV power generation prediction algorithms are commonly adopted in the prior art:
Method based on equivalent utilization hours: Based on historical weather data and installed capacity of the PV power station, equivalent utilization hours of the PV power station are calculated, then multiplied by the installed capacity to obtain annual power generation of the PV power station.

Statistical analysis method: A statistical model is established based on historical weather data and actual power generation data of the PV power station to predict future power generation of the PV power station.

Physical model method: A physical model is established based on characteristics of PV modules and light conditions to calculate power generation of the PV power station.

Empirical formula method: Based on installed capacity of the PV power station, light conditions, and conversion efficiency of PV modules, power generation of the PV power station is calculated using empirical formulas.

Deep learning-based method: Using historical weather data and historical power generation data of the PV power station as input, an artificial intelligence (AI) model that can reflect power generation characteristics of the PV power station or region is trained. The power generation characteristics refer to the power generation capability of a PV power station that is located within a specific local area B and is affiliated to "area A corresponding to the minimum granularity of meteorological data", when "area A is under a specific meteorological condition". Thus, based on future weather data, the AI model can more accurately predict the power generation of the PV power station over a certain future period. After prediction by the AI model, the power generation is corrected according to physical characteristics and a physical model of the PV modules. The physical characteristics include aging or degradation characteristics of the PV modules due to installation duration.

It should be noted that the above different prediction calculation methods for PV power generation may yield different results. Therefore, in estimation of the power generation of a PV power station, various factors can be comprehensively considered to select an appropriate calculation method. The PV power generation prediction algorithm can be implemented using the prior art, which will not be elaborated here.

The user load power prediction algorithm can accurately predict the power load of the user's electricity consumption. Currently, researchers have proposed various prediction models based on statistics, AI, and machine learning algorithms. The most commonly used method is the time series-based prediction method, which analyzes time series features of historical load data (such as electricity consumption habits of the user and electricity load conditions of the user) to predict a variation trend of future load. Common time series prediction algorithms include Autoregressive Moving Average (ARMA) model, Autoregressive Integrated Moving Average (ARIMA) model, and Seasonal Autoregressive Integrated Moving Average (SARIMA) model. These models have achieved certain prediction accuracy and reliability in practical applications. In addition to the time series-based methods, the Artificial Neural Network (ANN) is also a commonly used power load prediction algorithm. By simulating a computation process of a neuronal network, ANN can automatically learn features of the historical load data and predict a variation trend of future load. In ANN, Multilayer Perceptron (MLP) is the most widely used structure, which realizes load prediction by adjusting the weights and biases of the network.

Additionally, other neural network structures, such as the Recurrent Neural Network (RNN) and Long Short-Term Memory Network (LSTM), can be employed to improve prediction accuracy. Besides the above algorithms, there are methods based on statistics and machine learning techniques that can be used for user load power prediction, such as Support Vector Regression (SVR), decision tree, and random forest algorithms. These methods have their own advantages in terms of prediction accuracy, stability, and interpretability. In practical applications, suitable methods can be selected based on specific circumstances. The user load power prediction algorithm can also be implemented using the prior art, which will not be elaborated here.

In this embodiment, after the power generation of the PV power station and the user load electricity consumption are predicted using the PV power generation prediction algorithm and the user load power prediction algorithm, the resulting chart is shown in FIG. 3, where the dashed line part in the figure represents a predicted variation curve of the future operating data of the power station.

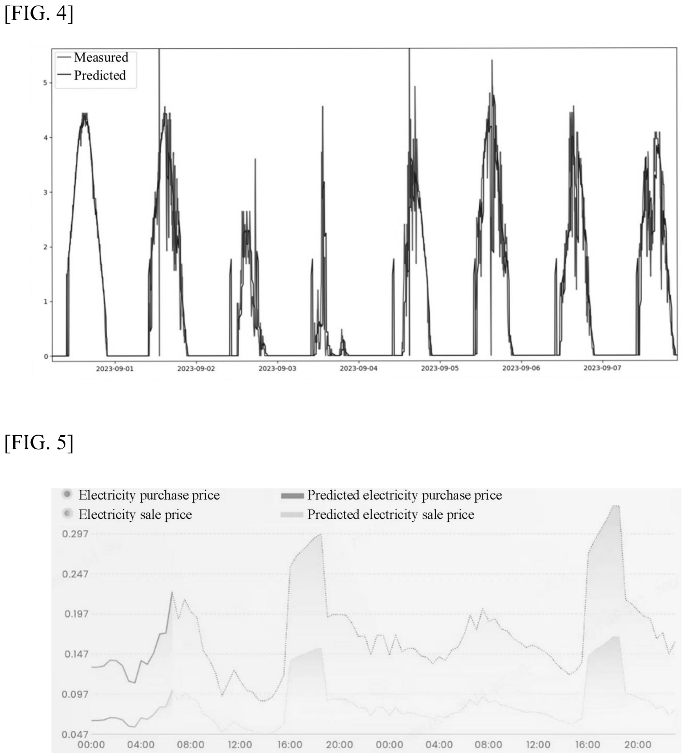

Through experimental statistics, the predicted data, which is obtained by predicting the power generation of the PV power station and the user load electricity consumption using the PV power generation prediction algorithm and the user load power prediction algorithm in this embodiment, is compared with actual measured data, and the prediction accuracy comparison is shown in FIG. 4. It can be seen that the prediction results are mostly within the allowable error range.

In the process where the PV energy storage system model estimates the electricity condition for each future time period based on the electricity consumption habits of the user and the future power generation of the PV power station, the electricity condition estimation is performed using PV and load prediction algorithms. The generated electricity condition estimation is an estimation result of electricity for each time period within 24 hours on a specific future date.

The expected TOU revenue is calculated based on system operating data over a certain period and the corresponding grid electricity purchase and sale prices.

For example, if the output electricity of a PV inverter (PCS) of the PV power station is greater than the electricity consumption of the load (Load) within a certain period (including but not limited to TOU control time granularity $\Delta t$ such as 5 minutes and 15 minutes), that is, PCS > Load, the excess electricity generated is sold to the grid. The revenue Profit1 during this period is the product of the sold electricity quantity and the electricity sale price:

$$\mathbf{Profit1} = \sum_{\mathbf{T}} (\mathbf{PCS} - \mathbf{Load}) * \mathbf{SellPrice}$$

If the output electricity of the PV inverter (PCS) of the PV power station is less than the electricity consumption of the load (Load) within a certain period (including but not limited to TOU control time granularity Δ**t** such as 5 minutes and 15 minutes), that is, PCS < Load, then part of the electricity consumed by the load comes from the grid. The revenue Profit2 during this period is defined as the cost saved by the PV system, which is the product of the electricity generated by the PV power station and the electricity purchase price:

$$\mathbf{Profit2} = \sum_{T} \mathbf{PCS} * \mathbf{BuyPrice}$$

In summary, the total TOU revenue of the PV power station over a certain period is jointly determined by the TOU strategy in each time period (TOU control implemented based on the TOU configuration information data), an operating status of the inverter of the PV power station, an operating status of the energy storage battery, and electricity output to/input from the utility grid, which is **Profit1 + Profit2.**

Furthermore, in the TOU revenue calculation unit of this embodiment, the user can choose whether to adopt dynamic electricity prices based on actual electricity price conditions. After importing dynamic electricity price data, the revenue management module can calculate the TOU revenue of the PV power station based on the dynamic electricity prices, thereby obtaining more accurate user revenue. An example of a dynamic electricity price table is shown in FIG. 5. The electricity purchase and sale prices provided by the power operator are shown by the corresponding solid lines in the figure. When the power operator does not provide the electricity purchase and sale prices for the next time period, an electricity price prediction algorithm is introduced to predict the electricity price (as shown by the dashed line in the figure), which is then used for the prediction calculation of TOU revenue. Of course, if the power operator has already provided the actual electricity purchase and sale prices for the future prediction period, the provided real electricity prices are directly used for the prediction calculation of TOU revenue.

In an implementation, the TOU revenue calculation unit includes a TOU intelligent optimization module; the revenue management module calculates corresponding TOU revenues of the PV power station under different TOU operation modes, and transmits calculation results to the TOU intelligent optimization module for statistical compilation; the TOU intelligent optimization module determines and selects TOU configuration information data corresponding to a specified TOU revenue based on the compiled calculation results, to implement TOU control for the PV power station. The configuration of the TOU intelligent optimization module facilitates users in implementing autonomous TOU settings, optimizes TOU revenue, and achieves the goal of maximizing economic benefits. This process can be implemented with user participation, or the TOU intelligent optimization module can independently perform TOU settings and issue TOU configuration information data.

The TOU intelligent optimization module is primarily responsible for running TOU strategy optimization algorithms. The TOU strategy optimization algorithms include, but are not limited to, convex optimization algorithms, operations research-based algorithms, and greedy algorithms, with the objective of finding a TOU strategy that maximizes revenue within a specific time period. During operation, the TOU revenue calculation unit transmits TOU strategies corresponding to different TOU configuration information data to the PV energy storage system model. The PV energy storage system model simulates and outputs the operating status of the PV power station within the control time windows of each TOU strategy, to estimate the electricity conditions of the PV power station. The revenue management module calculates the revenue within the control time window of each TOU strategy based on the electricity prices within the control time window of each TOU strategy, and computes the final overall TOU revenue. Combined with operations research-based algorithms, the above process is repeatedly executed and iterated, ultimately outputting an optimal TOU strategy and corresponding revenue over a specific period to a user interface.

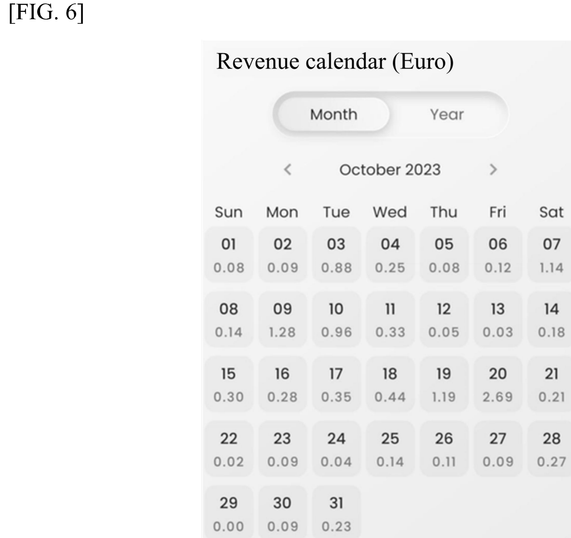

As shown in FIG. 6, it illustrates the daily TOU revenue of a PV power station of a user during October 2023. Based on this, the TOU strategy corresponding to the dates with relatively high revenue, that is, the TOU strategy (TOU configuration information data) corresponding to October 20, can be selected to implement TOU control on the PV power station. Alternatively, by comprehensively analyzing factors such as electricity consumption habits, load electricity consumption, and weather based on the TOU revenue table for that month, the TOU strategy can be further optimized.

The TOU intelligent optimization module can be deployed within the PV system or on a cloud computing platform, and can deliver TOU revenue calculation results to users through means including, but not limited to, mobile applications, PC software, and webpages.

In an implementation, the TOU revenue calculation unit calculates TOU revenues of the PV power station under different TOU configuration information data, and feeds back the calculation results to the TOU intelligent optimization module. The TOU intelligent optimization module compiles statistics on the calculation results and displays the statistical results to the user. The user selects TOU configuration information data corresponding to a specified TOU revenue (usually the maximum TOU revenue) based on the statistical results to configure and complete TOU control of the PV power station.

In another embodiment, the TOU revenue calculation unit calculates the TOU revenues of the PV power station under different TOU configuration information data, and feeds back the calculation results to the TOU intelligent optimization module. The TOU intelligent optimization module retrieves TOU configuration information data corresponding to the maximum TOU revenue based on the statistical results and uses the retrieved TOU configuration information data to configure and complete TOU control of the PV power station.

Embodiment 2:

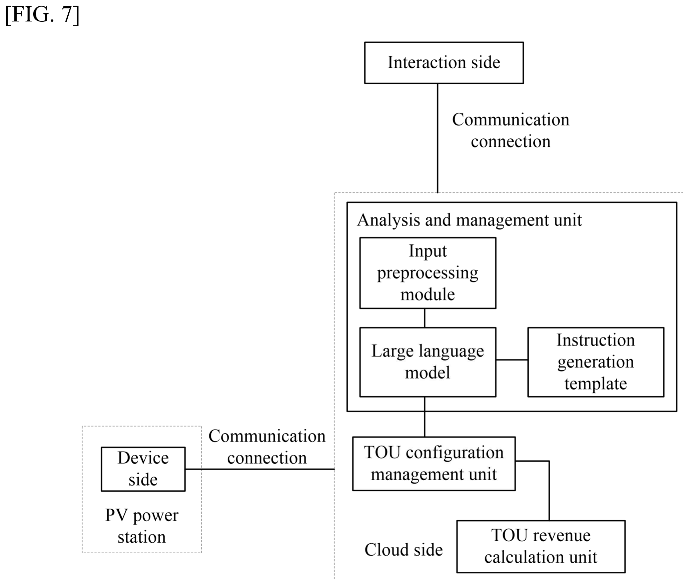

An intelligent management system for a PV TOU mode is described in this embodiment, which, as shown in FIG. 7, includes:

an interaction side configured to receive a parameter configuration instruction input by a user, where the parameter configuration instruction can be in the form of voice, text, or an image;
a device side, installed at a PV power station, where the device side performs control management on the PV power station;
a cloud side in communication connection with the interaction side and the device side;
an analysis and management unit, which can be configured on one of the interaction side, the device side, or the cloud side, where the analysis and management unit receives the parameter configuration instruction and performs analysis and processing to generate valid feature data;
a TOU configuration management unit, which can be configured on one of the interaction side, the device side, or the cloud side and is preset with a TOU data template and a plurality of configuration modes, where the TOU configuration management unit receives the valid feature data, selects the TOU data template or a configuration mode based on the valid feature data, and fills in and completes the TOU data template based on the valid feature data to form TOU configuration information data; the device side receives the TOU configuration information data and performs TOU control on the PV power station according to the TOU configuration information data; and
the TOU revenue calculation unit as described in Embodiment 1, connected to the TOU configuration management unit and configured to simulate operation of a PV power station under a TOU operation mode and calculate TOU revenue of the PV power station under TOU control based on the TOU configuration information data.

In this embodiment, both the analysis and management unit and the TOU configuration management unit are set on the cloud side. The interaction side is only used for inputting the parameter configuration instruction on the user side, and the device side only performs TOU control on the PV power station. Of course, the analysis and management unit and the TOU configuration management unit can also be separately set on the interaction side or the device side, or the interaction side and the device side can be integrated and set at the PV power station. These arrangements can be adjusted according to equipment and working environment of the user. The setting location of the component units should not be taken as a limitation on the protection scope of the present disclosure.

The intelligent management system for a PV TOU mode of the present disclosure has four configuration modes for setting the TOU configuration information data:

In the first method, a TOU configuration table can be downloaded from a power company according to a parameter configuration instruction and directly imported to complete local TOU configuration information data.

In the second method, on the basis of the automatic setting of the TOU configuration information data in the first method, parameters in the TOU configuration information data are adjusted through further input and constraints of the parameter configuration instruction to achieve personalized fine-tuning.

In the third method, setting modes for each time period can be directly input through the parameter configuration instruction, and after feature extraction, the setting modes are directly filled into the TOU data template to form the TOU configuration information data.

In the fourth method, electricity consumption habits of a user and historical and future operating status data of a PV power station are explicitly retrieved through the input of a parameter configuration instruction, to complete the configuration of the TOU mode while ensuring optimal electricity consumption experience of the user, achieving intelligent generation of the TOU configuration information data. TOU control can be further optimized under additional user input constraints.

It can be seen that the present disclosure can achieve more flexible and diverse setting modes according to different input parameter configuration instructions, while the input and setting process is not complicated. The setting target can be quickly achieved through favorable interaction with users during the setting process.

Specifically, the configuration modes may include a fully automatic configuration mode, a semi-automatic configuration mode, and an autonomous configuration mode. The first setting method corresponds to the fully automatic configuration mode, the second setting method corresponds to the semi-automatic configuration mode, and the third and fourth setting methods correspond to the autonomous configuration mode.

The analysis and management unit in this embodiment includes:

an input preprocessing module configured to receive the parameter configuration instruction input by the user, and perform feature extraction on the parameter configuration instruction to form an output instruction; and

a large language model with an input side connected to the input preprocessing module and an output side connected to the TOU configuration management unit, where the large language model receives the output instruction and performs processing to form the valid feature data.

During the analysis and processing of the parameter configuration instruction by the analysis and management unit, the input preprocessing module performs feature extraction on keywords in the user input instruction and forms a natural language-based output instruction; the large language model then performs format parsing on the output instruction to form the valid feature data, and modifies the TOU configuration information data based on the valid feature data.

Furthermore, during the analysis and processing of the parameter configuration instruction by the analysis and management unit, the input preprocessing module performs feature extraction on keywords in the parameter configuration instruction to form first feature data. Based on the first feature data, operating data of the PV power station can be retrieved and called to form second feature data. The second feature data and the first feature data are comprehensively processed by the large language model to form a natural language-based output instruction. After format parsing is performed on the output instruction, the valid feature data is formed. The TOU data template is filled based on the valid feature data to form the TOU configuration information data. The operating data of the PV power station includes transaction electricity prices with power companies, electricity transaction data, and historical load electricity consumption data.

In an implementation, the analysis and management unit further includes an instruction generation template; the instruction generation template is connected to the large language model and is configured to select and define a role played by the large language model.

The TOU revenue calculation unit is connected to the TOU configuration management unit. The TOU revenue calculation unit is configured with a PV energy storage system model. The TOU configuration information data after TOU configuration is imported into the PV energy storage system model for simulation calculation of TOU revenue.

Specifically, prediction algorithms are used to complete the electricity condition estimation for each future time period based on the electricity consumption habits of the user, historical operation data of the PV power station, and future weather. The revenue management module can then calculate the TOU revenue based on the results of the electricity condition estimation and the TOU configuration information data. The TOU revenue calculation unit generates future operating data through the PV power generation prediction algorithm and the user load power prediction algorithm based on equipment data of the PV power station of the user and weather data. Combined with a configured TOU strategy, the PV energy storage system model is run to estimate and output operating data of the PV system over a given future period, achieving the purpose of estimating electricity conditions, achieving the purpose of electricity condition estimation. Thereby, the expected TOU revenue is calculated based on the corresponding grid electricity purchase and sale prices.

Furthermore, the user can modify and adjust the TOU configuration information data through the input of the parameter configuration instruction. The PV energy storage system model in the TOU revenue calculation unit performs simulation synchronously according to the adjusted TOU configuration information data, while the revenue management module completes the calculation of the TOU revenue.

In an implementation, the TOU revenue calculation unit further includes a TOU intelligent optimization module. The configuration of the TOU intelligent optimization module facilitates users in implementing autonomous TOU settings, optimizes TOU revenue, and achieves the goal of maximizing economic benefits. This process can be implemented with user participation, or the TOU intelligent optimization module can independently perform TOU settings and issue TOU configuration information data.

The intelligent management system for a PV TOU mode in this embodiment can achieve intelligent management based on user's temporary instructions, reducing and simplifying the input requirements on a user terminal. Users only need to input parameter configuration instructions for TOU via voice, text, or even images. The analysis and management unit analyzes and processes the parameter configuration instructions to obtain valid feature data therefrom. Then, the TOU configuration management unit completes the TOU configuration information data according to the acquired valid feature data. The corresponding TOU revenue calculation can be performed synchronously with the adjustment of the TOU configuration information data, which can better meet user demands for autonomous TOU configuration. The process of TOU setting adjustment is simple and efficient, which can lower the technical threshold for operators in PV energy management, thereby improving user experience and realizing better management of PV power stations.

Additionally, users can adjust the TOU configuration information data by modifying the parameter configuration instruction. In other words, repeated modifications can be made according to the users' own ideas. During the modification process, the TOU revenue calculation unit calculates the TOU revenue based on the adjustments to the TOU configuration information data, and completes real-time simulation calculations of TOU revenues under different TOU strategies, thereby allowing users to perform calculations more independently. In this way, users can conveniently make repeated modifications based on personal ideas, satisfying their exploratory needs for maximum TOU revenue, and enhancing user engagement without increasing the complexity of TOU configuration.

The TOU revenue calculation unit further includes a TOU intelligent optimization module; the revenue management module calculates corresponding TOU revenues of the PV power station under different TOU operation modes, and transmits calculation results to the TOU intelligent optimization module for statistical compilation; the TOU intelligent optimization module determines and selects TOU configuration information data corresponding to a specified TOU revenue based on the compiled calculation results, to implement TOU control for the PV power station. The configuration of the TOU intelligent optimization module facilitates users in implementing autonomous TOU settings, optimizes TOU revenue, and achieves the goal of maximizing economic benefits. This process can be implemented with user participation, or the TOU intelligent optimization module can independently perform TOU settings and issue TOU configuration information data.

In other words, based on instruction data such as recent PV power generation, load electricity consumption, and weather conditions, the power generation of the PV product used by the user and the load electricity consumption of the user within a future period are predicted. Subsequently, with the objective of obtaining maximum revenue over a certain period, simulation calculation of TOU revenue is performed, thereby recommending a TOU configuration mode to the user.

Furthermore, the time period used for automatic TOU mode recommendation can also have a default time range setting, such as one month. Users can select the revenue calculation period as needed, including but not limited to time ranges such as one day, one week, or two weeks.

Additionally, an AI mode can be introduced. The intelligent management system for a PV TOU mode can employ AI algorithms to self-learn the electricity consumption habits of the user, load conditions, regional weather conditions, and the like, thereby continuously iterating and updating to optimize the automatically recommended TOU strategy, while meeting the electricity demand of the user and achieving optimal economic efficiency.

During the aforementioned TOU revenue calculations, electricity prices from the power company can be automatically obtained from servers thereof, enabling better adaptation to the electricity prices of the power company and achieving more accurate TOU revenue calculations. In other words, dynamic electricity prices are supported, thereby better fulfilling the goal of maximizing revenue.

The above embodiments are intended to illustrate only the technical conception and characteristics of the present disclosure, and are intended to enable a person familiar with the technology to understand content of the present disclosure and apply the content accordingly, and shall not limit the scope of protection of the present disclosure thereby. Any equivalent change or modification in accordance with the spiritual essence of the present disclosure shall fall within the scope of protection of the present disclosure.

**Claims**

1. A Time-of-Use (TOU) revenue calculation unit, wherein a photovoltaic (PV) power station operates in a TOU mode and is subjected to TOU control based on configured TOU configuration information data, the TOU revenue calculation unit comprises a PV energy storage system model and a revenue management module, the PV energy storage system model is formed based on a structural digital twin of the PV power station, and the PV energy storage system model simulates operation of the PV power station under a TOU operation mode, and the revenue management module calculates TOU revenue of the PV power station under the TOU operation mode.

2. The TOU revenue calculation unit according to claim 1, wherein the TOU revenue calculation unit comprises an auxiliary information acquisition module; the auxiliary information acquisition module is configured to retrieve and call auxiliary operation information of the PV power station; the TOU revenue calculation unit estimates future operating data of the PV power station based on the auxiliary operation information of the PV power station and calculates the TOU revenue of the PV power station by combining the future operating data of the PV power station and the TOU configuration information data.

3. The TOU revenue calculation unit according to claim 2, wherein the auxiliary operation information of the PV power station comprises weather information, electricity consumption habits of a user, and electricity load conditions of the user.

4. The TOU revenue calculation unit according to claim 1, wherein the TOU revenue calculation unit comprises a PV power generation prediction algorithm and a user load power prediction algorithm; the PV power generation prediction algorithm is used to estimate future power generation of the PV power station, the user load power prediction algorithm is used to estimate future electricity consumption of a user, and the revenue management module calculates the TOU revenue of the PV power station under the TOU operation mode.

5. The TOU revenue calculation unit according to claim 4, wherein the PV energy storage system model simulates and displays the operation of the PV power station under the TOU operation mode based on estimation results.

6. The TOU revenue calculation unit according to claim 1, wherein the revenue management module calculates the TOU revenue of the PV power station based on dynamic electricity prices.

7. The TOU revenue calculation unit according to claim 6, wherein the dynamic electricity prices are provided by a power operator and are specified electricity prices corresponding to different time periods on a given date.

8. The TOU revenue calculation unit according to any one of claims 1 to 7, wherein the TOU revenue calculation unit comprises a TOU intelligent optimization module; the revenue management module calculates corresponding TOU revenues of the PV power station under different TOU operation modes, and transmits calculation results to the TOU intelligent optimization module for statistical compilation; the TOU intelligent optimization module determines and selects TOU configuration information data corresponding to a specified TOU revenue based on the compiled calculation results, to implement TOU control on the PV power station.

9. The TOU revenue calculation unit according to claim 8, wherein the TOU intelligent optimization module compiles statistics on the calculation results and displays the statistical results to the user, and the user selects the TOU configuration information data corresponding to the specified TOU revenue based on the statistical results and conducts TOU control on the PV power station according to the corresponding TOU configuration information data.

10. The TOU revenue calculation unit according to claim 8, wherein the TOU intelligent optimization module compiles statistics on the calculation results, and the TOU intelligent optimization module retrieves the TOU configuration information data corresponding to the specified TOU revenue based on statistical results and conducts TOU control on the PV power station according to the corresponding TOU configuration information data.

11. An intelligent management system for a photovoltaic (PV) Time-of-Use (TOU) mode, comprising:

an analysis and management unit configured to receive a parameter configuration instruction input by a user and perform analysis and processing to generate valid feature data; a TOU configuration management unit preset with a TOU data template and a plurality of configuration modes, wherein the TOU configuration management unit receives the valid feature data, selects the TOU data template or a configuration mode based on the valid feature data, and fills in and completes the TOU data template based on the valid feature data to form TOU configuration information data; and the TOU revenue calculation unit according to any one of claims 1 to 10, connected to the TOU configuration management unit and configured to simulate operation of a PV power station under a TOU operation mode and calculate TOU revenue of the PV power station under TOU control based on the TOU configuration information data.

12. The intelligent management system for a PV TOU mode according to claim 11, wherein the intelligent management system for a PV TOU mode comprises an interaction side; the interaction side is configured to receive the parameter configuration instruction input by the user and perform adjustment according to the parameter configuration instruction to form the TOU configuration information data; the TOU revenue calculation unit receives the TOU configuration information data and simultaneously simulates the operation of the PV power station under the TOU operation mode, and simultaneously calculates the TOU revenue of the PV power station under TOU control based on the TOU configuration information data.

13. The intelligent management system for a PV TOU mode according to claim 11, wherein the analysis and management unit comprises:

an input preprocessing module configured to receive the parameter configuration instruction input by the user, and perform feature extraction on the parameter configuration instruction to form an output instruction; and a large language model with an input side connected to the input preprocessing module and an output side connected to the TOU configuration management unit, wherein the large language model receives the output instruction and performs processing to form the valid feature data.

14. The intelligent management system for a PV TOU mode according to claim 13, wherein during the analysis and processing of the parameter configuration instruction by the analysis and management unit, the input preprocessing module performs feature extraction on keywords in the user input instruction and forms a natural language-based output instruction; the large language model then performs format parsing on the output instruction to form the valid feature data, and modifies the TOU configuration information data based on the valid feature data.

15. The intelligent management system for a PV TOU mode according to claim 13, wherein the analysis and management unit comprises an instruction generation template; and the instruction generation template is connected to the large language model and is configured to select and define a role played by the large language model.

[FIG. 1]

[FIG. 2]

[FIG. 3]

[FIG. 4]

[FIG. 5]

[FIG. 6]

Revenue calendar (Euro)

| Month | Year |

< October 2023 >

| Sun | Mon | Tue | Wed | Thu | Fri | Sat |
|---|---|---|---|---|---|---|
| 01 | 02 | 03 | 04 | 05 | 06 | 07 |
| 0.08 | 0.09 | 0.88 | 0.25 | 0.08 | 0.12 | 1.14 |
| 08 | 09 | 10 | 11 | 12 | 13 | 14 |
| 0.14 | 1.28 | 0.96 | 0.33 | 0.05 | 0.03 | 0.18 |
| 15 | 16 | 17 | 18 | 19 | 20 | 21 |
| 0.30 | 0.28 | 0.35 | 0.44 | 1.19 | 2.69 | 0.21 |
| 22 | 23 | 24 | 25 | 26 | 27 | 28 |
| 0.02 | 0.09 | 0.04 | 0.14 | 0.11 | 0.09 | 0.27 |
| 29 | 30 | 31 | | | | |
| 0.00 | 0.09 | 0.23 | | | | |

[FIG. 7]

## INTERNATIONAL SEARCH REPORT

| International application No. |
| --- |
| **PCT/CN2024/101768** |

| A. | CLASSIFICATION OF SUBJECT MATTER |
| --- | --- |

G06Q10/10(2023.01)i

According to International Patent Classification (IPC) or to both national classification and IPC

| B. | FIELDS SEARCHED |
| --- | --- |

Minimum documentation searched (classification system followed by classification symbols)

IPC:G06Q

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 仿真, 分时电价, 光伏电站, 计算, 建模, 模拟, 模型, 收益, 电价, 能源, 需求, 分时, 光伏, 电站, 模块, 单元, tou, emulation, calculate, modeling, simulate, model, earnings, module, element

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 113902187 A (MARKETING SERVICE CENTER OF STATE GRID HEBEI ELECTRIC POWER CO., LTD. et al.) 07 January 2022 (2022-01-07) claims 1-10, and description, paragraphs [0079]-[0169] | 1-15 |
| Y | CN 112132309 A (GUIZHOU WANFENG ELECTRIC POWER CO., LTD. et al.) 25 December 2020 (2020-12-25) claims 1-11, and description, paragraphs [0025]-[0107] | 1-15 |
| Y | CN 115514005 A (BEIJING SHOTO ENERGY STORAGE TECHNOLOGY CO., LTD. et al.) 23 December 2022 (2022-12-23) claims 1-11, and description, paragraphs [0161]-[0305] | 11-15 |
| A | CN 110852519 A (GUIZHOU POWER GRID CO., LTD.) 28 February 2020 (2020-02-28) entire document | 1-15 |
| A | CN 108832654 A (CHINA ELECTRIC POWER RESEARCH INSTITUTE CO., LTD. et al.) 16 November 2018 (2018-11-16) entire document | 1-15 |
| A | US 2021350041 A1 (LEPLEY, benjamin) 11 November 2021 (2021-11-11) entire document | 1-15 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **28 August 2024** | **14 September 2024** |

| Name and mailing address of the ISA/CN | Authorized officer |
| --- | --- |
| **China National Intellectual Property Administration (ISA/ CN) China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/101768**

| Patent document cited in search report | | | Publication date (day/month/year) | Patent family member(s) | Publication date (day/month/year) |
|---|---|---|---|---|---|
| CN | 113902187 | A | 07 January 2022 | None | |
| CN | 112132309 | A | 25 December 2020 | None | |
| CN | 115514005 | A | 23 December 2022 | None | |
| CN | 110852519 | A | 28 February 2020 | None | |
| CN | 108832654 | A | 16 November 2018 | None | |
| US | 2021350041 | A1 | 11 November 2021 | None | |

Form PCT/ISA/210 (patent family annex) (July 2022)